Europäisches Patentamt

European Patent Office

Office européen des brevets

(11) Publication number: **0 332 412**
**A1**

## (12) EUROPEAN PATENT APPLICATION

(21) Application number: **89302289.7**

(22) Date of filing: **07.03.89**

(51) Int. Cl.4: **G 01 C 19/64**

(30) Priority: **07.03.88 US 167675**

(43) Date of publication of application:
**13.09.89 Bulletin 89/37**

(84) Designated Contracting States:
**BE CH DE FR GB IT LI NL SE**

(71) Applicant: **KEARFOTT GUIDANCE & NAVIGATION CORPORATION**
**150 Totowa Road CN595**
**Wayne New Jersey 07474-0595 (US)**

(72) Inventor: **Ferris, Lincoln Starr**
**176 Fox Hill Road**
**Denville, N.J. 07834 (US)**

**Shernoff, Donald Isaac**
**10 Franklin Avenue**
**White Plains, N.Y. 10601 (US)**

(74) Representative: **Wright, Peter David John et al**
**R.G.C. Jenkins & Co. 26 Caxton Street**
**London SW1H 0RJ (GB)**

(54) Combination fringe pattern and power monitoring assembly for a ring laser gyroscope.

(57) To detect both the rotation and rotational rate of a ring laser gyroscope and the power level of the laser beams circulating within a cavity of a particular axis in the gyroscope, the present invention uses a multiple segment photodetector, in combination with appropriate circuitry. The fringe pattern information relating to the gyroscope rotation is obtained by combining 90° out of phase currents from adjacent segments and the total power level of the circulating laser beams is obtained by summing algebraically the power from the different segments.

FIG.6

EP 0 332 412 A1

**Description**

## COMBINATION FRINGE PATTERN AND POWER MONITORING ASSEMBLY FOR A RING LASER GYROSCOPE

### FIELD OF THE INVENTION

The present invention relates to gyroscopes and more particularly to an assembly for detecting the fringe pattern and monitoring the power of laser beams circulating within a cavity of a ring laser gyroscope.

### BACKGROUND OF THE INVENTION

A conventional ring laser gyroscope uses a beam combiner optics assembly to fulfill two functions: that is, to detect the rotation of the gyroscope, with respect to inertial space, and to monitor the power level of the laser beams circulating within a cavity of the gyroscope. To achieve this end, up to this time, for a single axis gyroscope, two or three photodetectors had to be used; while for a three-axis gyroscope, a total of six or nine photodetectors, two or three photodetectors for each of the axes, have been needed.

In view of the continuing desire to minimize the space needed for mounting these gyroscopes to navigation vehicles, such as missiles and aircraft, a more compact gyroscope, with the number of photodiodes reduced, is warranted. Also, the signal levels for both the detected fringe pattern and the monitored power (of the circulating laser beams) need to be increased, since the signal level for a conventional gyroscope is quite low, in view of the fact that light from the circulating laser beams in a single axis gyro has to be divided into separate portions - the lion's share being reflected to the fringe pattern photodiode and the smaller portion to the power monitoring photodiodes. In addition, for the present-day gyroscope, the power level signal carries a time-varying (ac) gyro rotation signal, the so-called "winking" signal, which needs to be eliminated.

### SUMMARY OF THE PRESENT INVENTION

To successfully resolve the aforenoted problems, the present invention assembly, instead of using two or three different photodetectors for each axis of a three-axis ring laser gyroscope, would only use, for each of the axes, one photodiode that is divided into four segments. By combining the outputs from these segments and by means of appropriate electronic circuitry, both fringe pattern detection and the monitoring of the power level of the laser beams are achieved.

It is thus an objective of the present invention to provide for a combination fringe pattern and power monitoring assembly for a ring laser gyroscope.

It is another objective of the present invention to provide for an assembly which would improve the respective signals for both fringe detection and power monitoring.

It is yet another objective of the present invention to provide for a beam combiner assembly for a ring laser gyroscope that is cheaper and yet more efficient than those of conventional gyroscopes.

It is still a further objective of the present invention to provide for a monitored power level that is free of winking signals.

### BRIEF DESCRIPTION OF THE FIGURES

The above-mentioned objectives and advantages of the present invention will become more apparent and the invention itself will be best understood by reference to the following description of embodiments of the invention taken in conjunction with the accompanying drawings, wherein:

Fig. 1 is a cross-sectional view of a conventional beam combiner assembly for a single axis ring laser gyroscope;

Fig. 2A is a top view of a beam combiner assembly for a three-axis ring laser gyroscope;

Fig. 2B is a cutaway view, along line B-B, of the Fig. 2A assembly;

Fig. 2C is a cutaway view, along line C-C, of the Fig. 2A assembly;

Fig. 3 is a simplified electronic circuit for detecting fringe patterns of the Fig. 1 assembly;

Fig. 4A is a block diagram of a prior art fringe detector and pathlength control circuit for a single axis ring laser gyroscope;

Fig. 4B is a graph of pathlength versus laser intensity in accordance with which the principles of intentionally acquiring and processing an optical control signal are explained;

Fig. 5 is a block diagram of the fringe detection and power monitoring circuit for the instant invention;

Fig. 6 is a block diagram of the combined fringe detection and power monitoring circuitry for a single axis ring laser gyroscope;

Fig. 7A is a top view of a present invention combination fringe pattern and power monitoring assembly which is capable of monitoring two axes of a three-axis ring laser gyroscope; and

Fig. 7B is a cross-sectional view of the Fig. 7A assembly, shown along line B-B.

### DETAILED DESCRIPTION OF THE PRESENT INVENTION

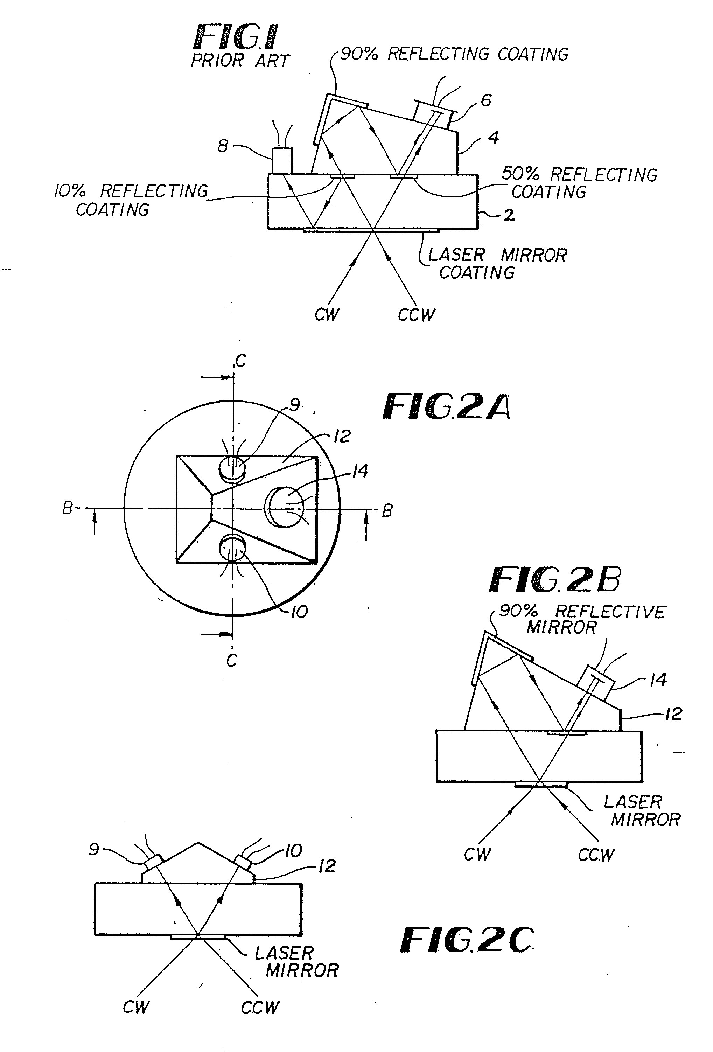

Fig. 1 shows, in cross-sectional view, a beam combiner assembly for a single axis ring laser gyroscope, hereinafter referred to as RLG. As is shown, the Fig. 1 assembly includes a light transmissive block 2, preferably made out of a low coefficient of expansion material such as Zerodur (or other similar material), on top of which is mounted a prism 4. As is well known, the purpose of this beam combiner optics assembly is to detect the rotation of the gyroscope (or gyro) and to monitor the power of the counter-rotating (or counter-propagating) laser beams, such as CW and CCW, circulating within the cavity about the axis of the gyroscope. To accomplish these functions, the prior art assembly would use two photodetectors, i.e. photodiodes 6 and 8, as shown, mounted on a facet of prism 4 and the top surface of block 2, respectively. The circulating beams would refract through the laser mirror coating and be reflected, per shown arrow lines, to photodiode 6 where the rotation of the gyroscope is determined by the apparent motion of fringes across the face of the photodiode. One of the beams, in this instance the CCW beam, is also reflected, by the 10% reflecting coating, to photodiode 8 where the power of the laser beam, and thus the power within the laser cavity, is measured and fed back to a circuit for controlling the pathlength of the laser beams.

In a three-axis RLG such as that shown in Figs. 2A, 2B and 2C, and fully discussed in copending application Serial No. 034,377 filed on April 6, 1987 and assigned to the same assignee as the instant invention, two photodiodes 9 and 10 are used to monitor the power of the circulating laser beams. As shown, these photodiodes are mounted on a beam combiner prism 12 which further has an additional photodiode 14 mounted on a different facet thereof. As taught in the aforenoted '377 copending application, photodiode 14 is used to detect the fringe pattern, i.e., the rotation of the gyro. For such a three-axis RLG, each of the beam combiner assemblies is mounted on a mirror that intercepts two axes of the gyroscope. In other words, the mirror, such as the laser mirror shown in Figs. 2B and 2C, is shared by two axes of the gyroscope and would in effect have four laser beams impinging thereon. Thus, two of the beams that strike the laser mirror are from a first axis while the other two beams striking the same laser mirror would be from an axis orthogonal to the first axis. And by using two of these beams to monitor the fringe pattern and the remaining two beams to monitor the power, with three of the Fig. 2A assemblies, all three axes of a three-axis RLG, both in terms of the respective power levels and rotations, are covered.

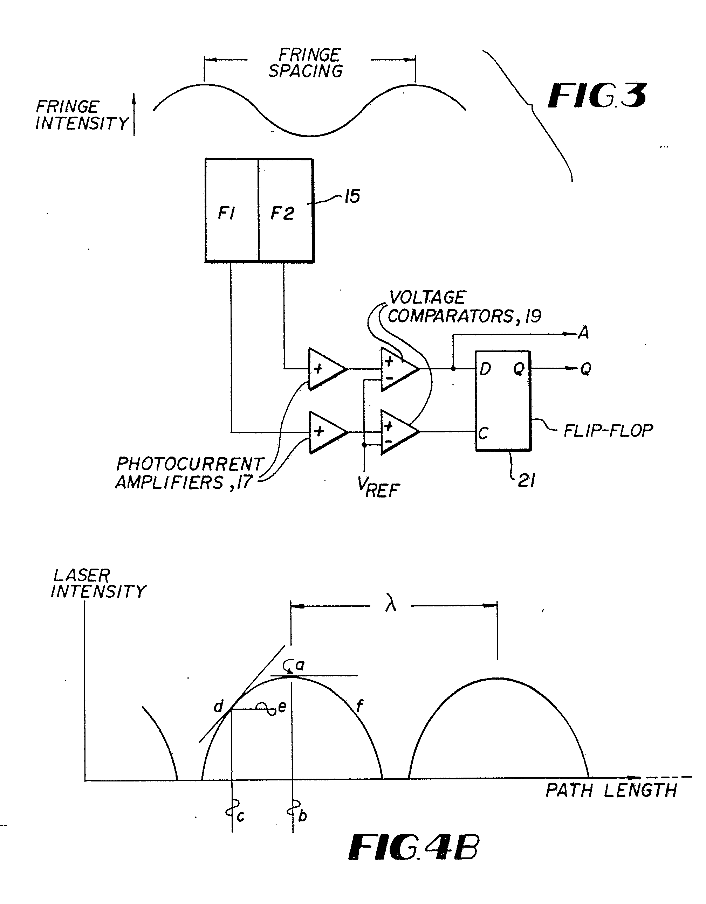

For the measurement of the gyro rotation rate, the beam combiner prism, such as those of Figs. 1 and 2A to 2C, would combine the two counter-rotating laser beams to form an interference pattern (or a fringe pattern) at the surface of photodiode 6 or 14. This fringe pattern moves across the face of the photodiode in a direction transverse to the fringe direction at a rate that is proportional to the rotation rate of the gyroscope. As shown in Fig. 3, a photodiode 15 contains two fringe segments, F1 and F2, which are oriented in parallel to the direction of the fringes, illustrated by the sinusoidal curve on top of the fringe segments.

As shown, the fringe spacing is adjusted so as to be four times the center-to-center distance of the photodiode segments. When the gyro rotates about the sensing axis, the moving fringes generate an alternating electrical signal in each of the photodiode segments. These signals then are amplified, by photocurrent amplifiers 17, and sent to logic components such as voltage comparators 19 and flip-flop 21 to produce a pair of logic signal outputs A and Q, respectively indicating the rate at which the fringe pattern moves across the photodiode, thereby indicating the rotation rate of the gyro, and the direction in which the fringe pattern is moving, thereby indicating the rotational direction of the gyro. As is well known, motion to the left produces a "true" logic level (1) at the Q output of the flip-flop, whereas motion to the right produces a "false" logic level (0) thereat. This pair of output signals A and Q, together, may be simply referred to as a fringe pattern signal.

It must be emphasized that, up to this time, the two segment photodiode shown in Fig. 3 has been used strictly to measure the fringe pattern of a gyro. It should also be appreciated by those skilled in the art that increased rate resolution may be obtained by more complex variations of the Fig. 3 circuit.

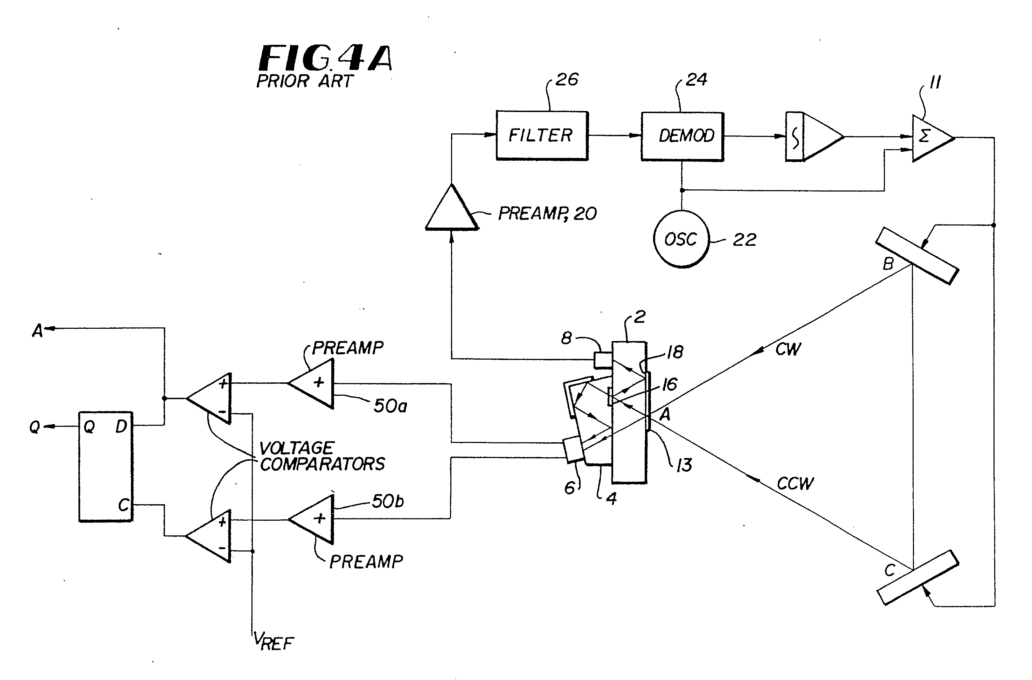

Referring to Fig. 4A, there is shown a prior art fringe detector and pathlength control circuit for a single-axis gyro. For the measurement of laser power and operation of a pathlength control loop, the output of photodiode 8 is used. As shown, in a closed optical cavity ABC, there is circulating in opposite directions traveling waves CW and CCW, shown confined by reflective mirrors B and C and partially transmissive mirror A at the apexes of the triangle ABC. As is well known, two of the mirrors, at B and C, are movable in response to voltage output of a summing amplifier 11 so as to maintain the cavity tuned to form an oscillator at the optical lasing frequency. Mirror 13 at A, being a partially transmissive mirror, allows processing of light from beams CW and CCW, by combiner prism 4 and light transmissive substrate 2, to produce a fringe pattern on dual segment photodiode 6. Photocurrents produced in photodiode 6 are amplified by dual fringe detector preamplifiers 50a and 50b, the outputs of which are processed to produce incremental angular output pulses in response to the sensor rotation, as previously described.

As shown, light from beam CCW is internally partially reflected at two surfaces 16 and 18 of light transmissive substrate 2 and transmitted to photodiode 8, the photocurrent of which is amplified by a preamplifier 20 and further processed to serve as a measure of cavity tuning. In terms of the further processing, it should be noted that an oscillator 22 produces a sinusoidal voltage, applied to amplifier 11, which in turn vibrates the mirrors at apexes B and C. The sinusoidal voltage is also applied to a demodulator 24 as a phase reference in the phase-sensitive demodulation of the signal at the output of preamplifier 20. Filter 26, in some implementations of pathlength control loops (PLC), is often not used.

Focusing on Fig. 4B, there is illustrated maximum laser intensity (for a tuned cavity), at point a on the intensity-versus-pathlength curve. A small sinusoidal modulation b of the pathlength produces no corresponding intensity modulation at that frequency due to the flatness of the curve at point a. The known approach recognizes that the same modulation c at point d on the curve produces an output e bearing the same phase as c, due to the positive slope of the curve at point d. Were the modulation at point f, the output phase would be reversed (not shown). The magnitude and phase of the intensity modulation are used by the pathlength control loop as error indications to cause automatic repositioning of the movable mirrors at apexes B and C (Fig. 4A) to achieve optimum operation at point a of the Fig. 4B intensity curve.

As was pointed out with respect to the discussion of Figs. 2A and 2C, separate detectors are used for detecting the fringe pattern motion and the power level of the laser beams in the assembly shown in those figures, and disclosed in the '377 copending application. The advantage of using two separate power detectors is that the power level signal is not contaminated by the time-varying gyro rotation signal.

In other words, the time-varying gyro rotation signals, often referred to as "winking" signals, tend to cancel when using CW and CCW power detecting photodiodes, since those signals are out of phase. This is important insofar as the presence of an outside signal near the operating frequency of the power regulating circuit will disrupt its operation.

Another method of optimizing and simplifying the optics design is taught in copending application Serial No. 013,080, filed February 9, 1987 and assigned to the same assignee as the instant invention. In the '080 copending application, it is disclosed that the time-varying intensity modulation required for laser power measurement and subsequent pathlength control loop operation is separated from the spatial intensity variation of the fringe pattern by an amplitude modulation detection means.

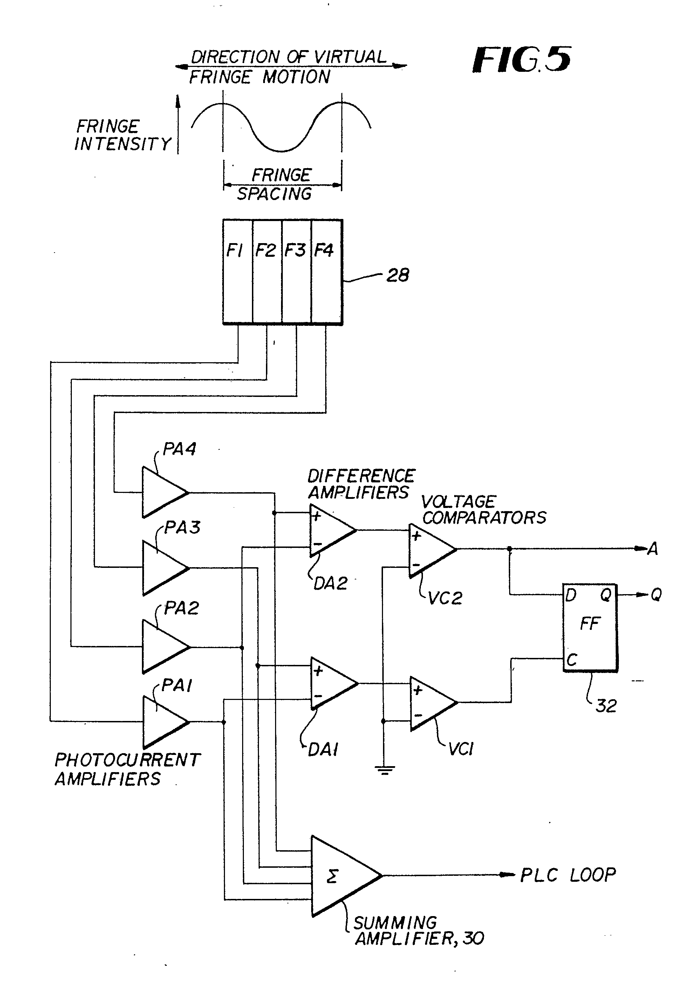

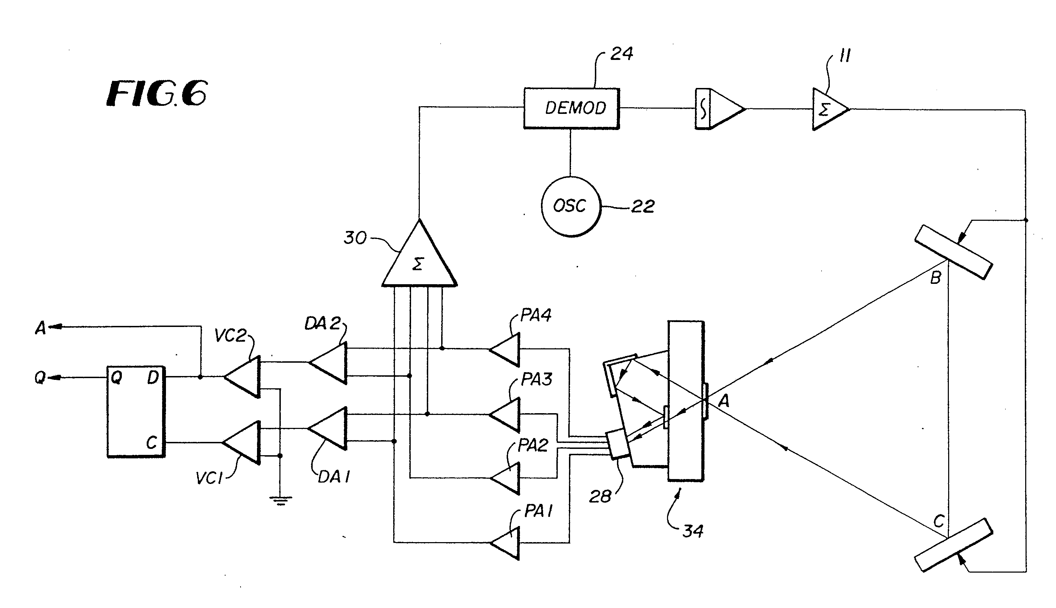

Fig. 5 illustrates a first preferred embodiment of the present invention. There, a four segment photodiode 28 having segments F1 to F4, with respective outputs connected to photocurrent amplifiers PA1 to PA4, is shown. Similar to the two segment photodiode shown in Fig. 3, photodiode 28 is oriented parallel to the direction of the fringes and in the same manner as that shown in Fig. 2B. See also assembly 34 in Fig. 6. It should be noted, however, that the power detection portion that requires photodiodes 9 and 10 in Figs. 2A and 2C, is missing in assembly 34. Instead, power detection is accomplished in the instant invention by processing the outputs of the four segment photodiode through a summing amplifier 30, as shown in Fig. 5.

Specifically, the fringe pattern spacing relative to the photodiode segment spacing remains the same, per Fig. 3; that is, there remains a 90° spatial separation of the adjacent segments. In other words, the difference in phase between segments F1 and F2, between segments F2 and F3, between segments F3 and F4, and between segments F4 and F1 (due to spatial periodicity) could be processed in the same manner as that discussed with respect to Fig. 3, in order to obtain the rate of rotation and the direction of the fringe motion. A preferred method, however, would be to process the difference between alternate segment pairs, i.e., between the outputs of segments F1 and F3 and between the outputs of segments F2 and F4, thereby obtaining the benefit of processing the signals, produced by 100% of the incident light impinging on the four segment photodiode. The four segment photodiode, illustratively, is of the type manufactured by United Detector Technology of Culver City, California 90230. It should be noted that a photodiode having more than four segments may also be used. Yet it has been found that a greater than four segment photodiode adds nothing substantive, except expense and redundancy, to the invention. Likewise, a three segment photodiode has been envisioned; but the use of such photodiode would entail complicated scaling manipulations.

The above discussed processing is achieved by means of the circuitry shown in Fig. 5 wherein the outputs from segments F1 to F4 are respectively connected to corresponding inputs of photocurrent amplifiers PA1 to PA4. As shown, the outputs of amplifiers PA1 and PA3 are fed to a difference amplifier DA1; while the outputs of amplifiers PA2 and PA4 are fed to the inputs of a difference amplifier DA2. The respective outputs from amplifiers DA1 and DA2 are fed to corresponding voltage comparators VC1 and VC2. Amplifiers DA1 and DA2, as their names imply, measure the difference between the output signals from the respective photocurrent amplifier pairs and provide a difference signal to comparators VC1 and VC2, which operate as analog to voltage converters for transmitting logic signals to flip-flop 32. As is apparent, the outputs from this portion of the Fig. 5 circuit results in the detection of the magnitude, outputted at A, and the direction, outputted at Q, of the fringe pattern. All of the just discussed amplifiers, comparators and flip-flop are conventional electronic components and are made by a number of companies, including for example Intel and Texas Instruments.

By thus using all of the light impinging on the four segment photodiode to process the signals, the highest sensitivity signal is obtained. Moreover, an improved signal-to-noise ratio is accomplished since the signal components are added algebraically while the noise contributions are combined statistically. In other words, the segments whose output differences are processed into fringe signals which, because they are 180° out of phase and are subtracted, produce additive harmonic outputs. The outputs of difference amplifiers DA1 and DA2, since their signals differ in phase by 90° and they have zero dc (or average) components by virtue of the subtraction process, when fed to the respective voltage comparators VC1 and VC2, would produce rate and direction information per as discussed.

The second portion of the Fig. 5 circuitry deals with the power monitoring aspect of the instant invention. For this portion, the respective outputs from photocurrent amplifiers PA1 to PA4 are fed to a conventional summing amplifier 30 which, in response to the input signals, produces an output level that is free of time varying signals. This is due to the fact that the photocurrent amplifier outputs intercept 360 spatial degrees of the periodic fringe pattern, thereby producing a zero average value for that harmonic component. But it should be appreciated that the output level is proportional to the spatially integrated level of illuminations (or incident light flux) of the four photodiode segments F1 to F4, including any temporal modulation of that intensity such as typically used in pathlength control means. As is shown in Fig. 5, the output from summing amplifier 30 is transmitted to a pathlength control loop (PLC), which is more clearly shown in Fig. 6.

Referring to Fig. 6, a block diagram illustrating the complete circuitry for detecting the fringe pattern and measuring the power of the laser beams in a particular cavity along an axis of a RLG is shown. For the sake of simplicity, the components shown in Fig. 6 which are the same as those shown in Figs. 5 and 4A are labelled the same. Comparing the Fig. 4A circuit with the Fig. 6 circuit, it can be seen that, with reference to the power monitoring portion of the circuit, the Fig. 6 circuit no longer needs to have preamplifier 20 and filter 26. As was discussed earlier, the ac component, i.e., the time varying component, has been removed by summing amplifier 30. Putting it differently, the spatial time-varying component is removed, but the jitter intensity modulation, in-phase for both CW and CCW beams, is retained for PLC loop use. Insofar as the remaining components of the power monitoring portion of the circuit for the Fig. 6 circuitry is the same as that shown in Fig. 4A, no further discussion thereof is deemed necessary herein.

As for the fringe pattern detection portion, it should be noted that different types of amplifiers are used to convert the same outputs, such as those fed to summing amplifier 30, from assembly 34 to measure the fringe pattern. Of particular import is the fact that albeit assembly 34, at first glance, appears to resemble the assembly shown in Fig. 2B, it should be remembered that beam combiner assembly 34 has a four segment photodiode 28 while photodiode 14 (for the Fig. 2B assembly) is only utilizing two segments and is used strictly for fringe pattern detection.

From the above discussion, it should be apparent that several advantages are obtained when the Fig. 6 embodiment is used. These advantages include: using only one photodiode instead of at least two for a single axis gyro; utilizing less reflective coatings on the beam combiner prism - for example, the elimination of the 10% reflecting coating shown in Fig. 1; obtaining an inherently higher signal level for both the rotation sensing and the power sensing functions, since all of the incident light from both circulating laser beams is used for both functions; and eliminating the time varying gyro rotation signal, also known as the winking signal, from the power level signal.

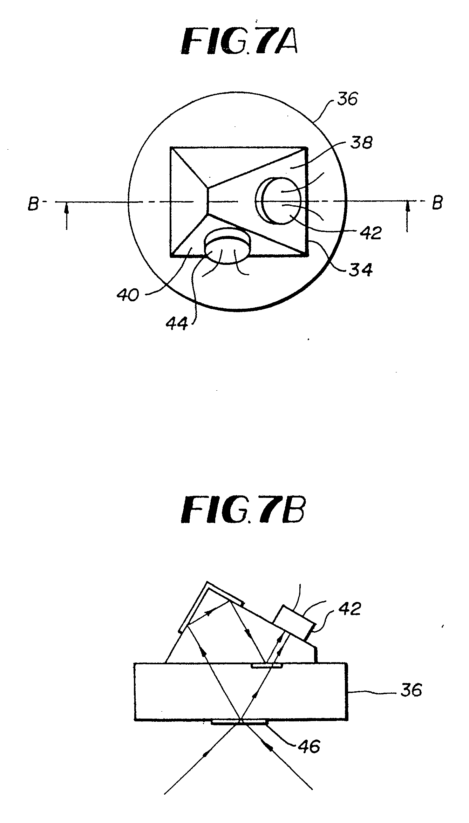

In view of the fact that the Fig. 6 embodiment need only use one photodiode to both detect the rotation of the gyro and to monitor the power of the circulating laser beams in a corresponding axis, a second embodiment, shown in Figs. 7A and 7B, illustrates the use of two photodiodes for performing both functions for two axes of a three-axis RLG. As shown in Fig. 7A, a beam combiner prism 34 mounted on a light transmissive substrate 36 has fixedly coupled to facets 38 and 40 photodiodes 42 and 44, respectively. As was discussed, in a three-axis RLG, each mirror, such as 46 in Fig. 7B, has impinged thereon four laser beams, two pairs of circulating beams in cavities along axes that are orthogonal to each other. Consequently, by using one of the photodetectors, for example 42, to detect one pair of circulating beams and by using a second photodiode, such as 44, to detect circulating laser beams that are orthogonal to those transmitted to photodiode 42, the respective fringe patterns and power levels for two axes of a three-axis RLG can thus be determined. The fringe pattern and power level for each axis are obtained per earlier discussion with respect to Figs. 5 and 6.

Insofar as a three-axis RLG has three mirrors which may be used to monitor the respective power levels and fringe patterns, additional left over capacity, in terms of available mirror space, results. This allows the addition of redundant optics thereon so that in the event a photodetector along one axis fails, the gyroscope would still be operational. Also, the unoccupied mirror could be used for a function which may be completely different from that discussed so far. Of course, it should be appreciated that for each of the photodiodes shown in Fig. 7A, the circuitry shown in Fig. 6 would be equally applicable thereto.

Inasmuch as the present invention is subject to many variations, modifications and changes in detail, it is intended that all matter described throughout this specification and shown in the accompanying drawings be interpreted as illustrative only and not in a limiting sense. Accordingly, it is intended that the invention be limited only by the spirit and scope of the appended claims.

## Claims

1. In a three-axis ring laser gyroscope, each axis having a pathlength controller assembly, the improvement comprising:
beam combiner means fixedly coupled to the gyroscope at at least one axis thereof for intercepting and refracting laser beams circulating along the axis in a corresponding cavity within the gyroscope;
detector means mounted onto a facet of the beam combiner means, the detector means including a plurality of photodetector segments upon which the refracted beams impinge, the photodetector segments providing respective output signals;
first circuit means connected to the detector means for receiving the photodetector segment output signals, and for converting the received signals into a fringe pattern signal corresponding to the rotation rate and the rotational direction of the gyroscope about the axis;
second circuit means connected to the detector means for receiving the photodetector segment output signals, and for measuring and summing the respective power of the segment signals, the thus summed power being used to drive the pathlength controller assembly for controlling the pathlength of the laser beams circulating along the axis, thereby effecting an optimum power level therefor.

2. The subject matter set forth in claim 1, wherein the detector means comprises a four segment photodiode.

3. The subject matter set forth in claim 1, wherein the first circuit means comprises:
a plurality of photocurrent amplifiers each respectively connected to one of the photodetector segments for receiving a corresponding segment signal therefrom; and
a plurality of difference amplifiers each having as inputs thereto photocurrent signals provided from alternate pairs of the photocurrent amplifiers for producing harmonic outputs representative of the fringe pattern signal.

4. The subject matter set forth in claim 1, wherein the second circuit means comprises:
a plurality of photocurrent amplifiers each respectively connected to one of the photodetector segments for receiving a corresponding segment signal therefrom; and
means for summing photocurrent signals provided respectively from the photocurrent amplifiers to produce an output signal representative of the summed power.

5. The subject matter set forth in claim 3, further comprising:
means connected to the difference amplifiers for converting the harmonic outputs from analog to digital, and for generating magnitude and direction values corresponding to the fringe pattern signal.

6. The subject matter set forth in claim 1, wherein the beam combiner means comprises a beam combiner prism; and
wherein one of the laser beams is directly refracted by the beam combiner prism to the photodetector segments while the other of the laser beams is reflected by reflective means to the photodetector segments.

7. In a three-axis ring laser gyroscope, each axis having a pathlength controller assembly, the improvement comprising:
beam combiner means fixedly coupled to the gyroscope for intercepting and refracting two pairs of laser beams circulating in corresponding two axes orthogonal to each other;
detector means mounted onto respective first and second facets of the beam combiner means, each of the detector means including a plurality of photodetector segments upon which the respective pair of laser beams of a corresponding axis impinge, the photodetector segments providing respective output signals;
wherein, for each detector means, corresponding first circuit means are connected to the detector means for receiving the segment output signals therefrom, and for converting the received signals into a fringe pattern signal for the corresponding axis, the fringe pattern signal representing the rotation rate and the rotational direction of the gyroscope along the corresponding axis; and
corresponding second circuit means connected to the detector means for receiving the segment output signals, and for measuring and summing the power of the respective segment signals, the thus summed power being used to drive the pathlength controller assembly for controlling the pathlength of the laser beams circulating along the corresponding axis, thereby effecting an optimum power level therefor.

8. The subject matter set forth in claim 7, wherein each of the detector means comprises a four segment photodiode.

9. The subject matter set forth in claim 7, wherein each corresponding first circuit means comprises:
a plurality of photocurrent amplifiers each respectively connected to one of the photodetector segments for receiving a corresponding segment signal therefrom; and
a plurality of difference amplifiers each having as inputs thereto photocurrent signals provided from alternate pairs of the photocurrent amplifiers for producing harmonic outputs representative of the fringe pattern signal of the corresponding axis.

10. The subject matter set forth in claim 7, wherein each corresponding second circuit means comprises:
a plurality of photocurrent amplifiers each respectively connected to one of the photodetector segments for receiving a corresponding segment signal therefrom; and
means for summing photocurrent signals provided respectively from the photocurrent amplifiers to produce an output signal representative of the summed power of the corresponding axis.

11. The subject matter set forth in claim 9, further comprising:
means connected to the difference amplifiers for converting the harmonic outputs from analog to digital, and for generating magnitude and direction values representative of the fringe pattern signal for the corresponding axis.

12. The subject matter set forth in claim 7, wherein the beam combiner means comprise a beam combiner prism; and
wherein, for each of the detector means, one beam of the respective pair of laser beams is directly refracted by the beam combiner prism to the photodetector segments of the detector means while the other beam of the respective pair of laser beams is reflected by reflective means to the photodetector segments.

FIG.1
PRIOR ART

90% REFLECTING COATING

10% REFLECTING COATING

50% REFLECTING COATING

LASER MIRROR COATING

CW    CCW

FIG.2A

FIG.2B

90% REFLECTIVE MIRROR

LASER MIRROR

CW    CCW

FIG.2C

LASER MIRROR

CW    CCW

FRINGE
SPACING

FRINGE
INTENSITY

*FIG.3*

F1  F2  — 15

VOLTAGE
COMPARATORS, 19

A

D  Q  → Q

C  — FLIP-FLOP

PHOTOCURRENT
AMPLIFIERS, 17

$V_{REF}$

21

LASER
INTENSITY

$\lambda$

a

d  e  f

c  b

PATH LENGTH

*FIG.4B*

FIG.4A
PRIOR ART

EP 0 332 412 A1

**FIG.5**

DIRECTION OF VIRTUAL FRINGE MOTION

FRINGE INTENSITY

FRINGE SPACING

F1 F2 F3 F4 — 28

PA4

PA3

PA2

PA1

PHOTOCURRENT AMPLIFIERS

DIFFERENCE AMPLIFIERS

DA2

DA1

VOLTAGE COMPARATORS

VC2

VC1

FF

D Q → Q

C

32

→ A

SUMMING AMPLIFIER, 30

→ PLC LOOP

**FIG.6**

# FIG.7A

# FIG.7B

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-4 320 974 (LJUNG)<br>* Abstract; figure 2; column 2, line 63 - column 3, line 30 * | 1,6,7,<br>12 | G 01 C 19/64 |
| Y | GB-A-2 137 013 (SINGER)<br>* Abstract; figure 1 * | 1-12 | |
| Y | US-A-4 219 276 (PORSMAN)<br>* Whole document * | 1-5,7-<br>11 | |
| A | FR-A-2 532 418 (BRITISH AEROSPACE)<br>* Figure 5; page 15, lines 19-32 * | 2,8 | |
| A | US-A-4 637 723 (EGLI et al.)<br>* Figures 2,3; abstract; column 9, lines 8-42; claims 1-3 * | 1,7 | |

TECHNICAL FIELDS SEARCHED (Int. Cl.4)

G 01 C
G 01 P

The present search report has been drawn up for all claims

| Place of search | Date of completion of the search | Examiner |
|---|---|---|
| THE HAGUE | 01-06-1989 | KOLBE W.H. |